# EUROPÄISCHE PATENTSCHRIFT

(11) **EP 2 488 316 B1**
(45) Veröffentlichungstag und Bekanntmachung des Hinweises auf die Patenterteilung: **13.09.2017**
(21) Anmeldenummer: 10768693.3
(22) Anmeldetag: 13.10.2010
(51) Int. Cl.: B21J 15/02, B21J 15/10

(54) **SETZGERÄT ZUM VERBINDEN VON MINDESTENS ZWEI BAUTEILEN**
DEVICE FOR FASTENING AT LEAST TWO WORKPIECES
DISPOSITIF DE FIXATION D'AU MOINS DEUX PIÈCES

(30) Priorität: 16.10.2009 DE 102009049616
(43) Veröffentlichungstag der Anmeldung: 22.08.2012
(73) Patentinhaber: Böllhoff Verbindungstechnik GmbH, 33649 Bielefeld (DE)
(72) Erfinder: DRAHT, Torsten, 33758 Schloß Holte-Stukenbrock (DE); HUHN, Berthold, 33803 Steinhagen (DE); HAESLER, Bernd, 33790 Halle/Westfalen (DE); KEISER, Marion, 32760 Detmold (DE)
(74) Vertreter: Heyer, Volker
(86) Internationale Anmeldenummer: PCT/EP2010/006272
(87) Internationale Veröffentlichungsnummer: WO 2011/045054

(56) Entgegenhaltungen:
- WO-A1-92/18264
- DE-A1- 19 942 390
- DE-A1-102004 002 974
- DE-A1-102007 020 167
- FR-A- 357 845
- FR-A1- 2 532 205
- US-A1- 2005 132 563

## Beschreibung

### 1. Gebiet der Erfindung

Die vorliegende Erfindung betrifft ein Setzgerät zum Verbinden von mindestens zwei Bauteilen, insbesondere zum Stanznieten, siehe z.B. FR 2 532 205.

### 2. Hintergrund der Erfindung

Im Stand der Technik sind Setzgeräte bekannt, die aus einem C-Bügel bestehen, an dessen einem Ende ein hydraulischer Setzzylinder angeordnet ist. Derartige Konstruktionen weisen aufgrund ihrer ausladenden Abmessungen eine große Störkontur auf. Um diesen Nachteil zu überwinden ist man im Stand der Technik zu zangenartig arbeitenden Setzgeräten übergegangen. Ein entsprechendes Beispiel ist in EP 0 550 705 B1 offenbart. Dort werden zwei Hebel ähnlich einer Zange über einen Drehpunkt miteinander verbunden. Mit Hilfe einer manuellen oder einer Betätigung über ein lineares Stellglied werden die Hebel derart bewegt, dass sich die jeweils an den Enden der Hebel befindenden Arbeitsenden aufeinander zu bewegen. Auf diese Weise können Fügevorgänge mit den Arbeitsenden der Hebel realisiert werden.

Je nach Anwendungsfall und zu realisierendem Fügeverfahren weisen derartige Setzgeräte unterschiedliche Bauformen auf. Entsprechende Beispiele sind WO 02/078892, DE 10 2004 002 974 und DE 10 2007 020 167 zu entnehmen.

Es ist die Aufgabe vorliegender Erfindung, ein gegenüber dem Stand der Technik optimiertes Setzgerät bereitzustellen. Dieses Setzgerät soll nicht nur eine geringe Störkontur aufweisen, sondern ebenfalls einen effizienten Betrieb gewährleisten.

### 3. Zusammenfassung der Erfindung

Die oben genannte Aufgabe wird durch ein Setzgerät gemäß dem unabhängigen Patentanspruch 1 gelöst. Vorteilhafte Ausgestaltungen sowie Weiterentwicklungen vorliegender Erfindung gehen aus der Beschreibung, den Zeichnungen und den abhängigen Ansprüchen hervor.

Mit dem erfindungsgemäßen Setzgerät sind mindestens zwei Bauteile miteinander verbindbar. Diese Verbindung wird beispielsweise durch Stanznieten, Clinchen oder ein ähnliches Fügeverfahren hergestellt. Das Setzgerät gemäß vorliegender Erfindung weist die folgenden Merkmale auf: einen ersten Hebelarm mit einem ersten Arbeitsende und einen zweiten Hebelarm mit einem zweiten Arbeitsende, die zangenartig schwenkbar miteinander verbunden sind, einen ersten Linearantrieb in Verbindung mit dem ersten und dem zweiten Hebelarm, so dass über eine Längenänderung des Linearantriebs das erste und das zweite Arbeitsende relativ zueinander bewegbar sind, und einen am ersten Arbeitsende angeordneten Stempel, der mit einem Zuführmodul für Fügeelemente und/oder einem Niederhaltermodul verbunden ist.

Das erfindungsgemäße Setzgerät wird durch eine zangenartige Konstruktion bestehend aus zwei Hebelarmen gebildet. Diese beiden Hebelarme sind drehbar derart miteinander verbunden, dass jeweils ein Ende des ersten und zweiten Hebelarms einander gegenüberliegend angeordnet sind. Diese Enden der Hebelarme werden als Arbeitsenden bezeichnet. Die Arbeitsenden des ersten und zweiten Hebelarms dienen vorzugsweise der Befestigung einer Matrize und eines Stempels, um damit Stanznietprozesse zu realisieren. In Abhängigkeit von dem zu realisierenden Fügeverfahren werden daher die beiden einander gegenüberliegenden Arbeitsenden mit dem entsprechenden Werkzeug und Gegenwerkzeug ausgestattet. Auf dieser konstruktiven Grundlage können mit dem vorliegenden Setzgerät vorzugsweise auch Clinchprozesse durchgeführt werden.

Die beiden schwenkbar miteinander verbundenen Hebelarme werden mit Hilfe eines Linearantriebs um den gemeinsamen Drehpunkt verschwenkt. Ein derartiger Linearantrieb besteht vorzugsweise aus einem hydraulischen Kolben-Zylinder-Antrieb, einem pneumatischen Kolben-Zylinder-Antrieb oder einem elektromotorischen Linearantrieb, wie einen E-Spindeltrieb.

Gemäß einer bevorzugten Ausführungsform ist angrenzend an den Stempel des Setzgeräts am ersten Arbeitsende des ersten Hebelarms ein Zuführmodul für Fügeelemente angeordnet. Dieses Zuführmodul führt einzelne Fügeelemente, wie beispielsweise Halbhohlstanzniete, einem Fügekanal zu, so dass ein reibungsloser Betrieb des Setzgeräts gewährleistet ist. Dieses Zuführmodul reduziert daher Stillstandszeiten des Setzgeräts und nutzt die Verfahrzeiten des Setzgeräts zum Nachliefern eines neuen Fügeelements.
Gemäß einer weiteren Alternative wird der Stempel am ersten Arbeitsende in Kombination mit einem Niederhaltermodul eingesetzt. Dieses Niederhaltermodul dient dem mechanischen Vorspannen oder Festhalten der miteinander zu verbindenden Bauteile. Auf diese Weise wird ebenfalls ein effektives Setzverfahren gewährleistet.

Gemäß der vorliegenden Erfindung sind der Stempel und/oder eine am zweiten Arbeitsende angeordnete Matrize durch den Linearantrieb entlang einer Kreisbahn bewegbar, um die Verbindung zwischen den mindestens zwei Bauteilen herzustellen. Die Konstruktion der verschwenkbaren Hebelarme ist derart gewählt, dass das Fügen oder allgemein Verbinden der mindestens zwei Bauteile basierend auf einer Bewegung von Werkzeug und Gegenwerkzeug entlang einer Kreisbahn erfolgt. Da sich das Werkzeug, beispielsweise der Stempel, und das Gegenwerkzeug, beispielsweise die Matrize, auf derselben Kreisbahn bewegen, ist eine verlässliche Verbindung durch ihr Zusammenwirken herstellbar.

Gemäß der vorliegenden Erfindung wird das Setzgerät in Kombination mit dem Niederhaltermodul genutzt. Der Stempel ist somitinnerhalb eines hohlzylindrischen Niederhalters angeordnet, der relativ zum Stempel linear bewegbar ist. Der Niederhalter ist mit einem Linearantrieb verbunden, so dass die mindestens zwei Bauteile in eine Vorspannposition des Niederhalters zwischen dem Niederhalter und dem zweiten Arbeitsende, insbesondere einer Matrize, mechanisch vorspannbar sind.

Um zwei Bauteile miteinander zu verbinden, wird beispielsweise ein Halbhohlstanzniet allein durch den Linearantrieb zwischen dem ersten und zweiten Hebelarm gesetzt. Um auch bei dieser Konstruktion ein mechanisches Vorspannen der zu verbindenden Bauteile zu verwirklichen, ist an dem ersten Arbeitsende des ersten Hebelarms ein Niederhalter mit eigenem Linearantrieb angeordnet. Aufgrund seiner hohlzylindrischen Form ist der Niederhalter unabhängig vom Stempel am ersten Arbeitsende des ersten Hebelarms mit Hilfe des zweiten Linearantriebs bewegbar. Dies ermöglicht das mechanische Vorspannen der zu verbindenden Bauteile, bevor der Stempel am ersten Arbeitsende des ersten Hebelarms eine Verbindung zwischen den zwei Bauteilen herstellt. Der Niederhalter ist weiterhin mit einer Rückstellfeder vorgesehen, mit der der Niederhalter aus der Vorspannposition in eine Ausgangsposition rückstellbar ist.

Gemäß einer bevorzugten Ausführungsform umfasst das Zuführmodul einen relativ zum Stempel linear versetzbaren hohlzylindrischen Fügekanal, durch den der Stempel bewegbar ist. Der Fügekanal weist vorzugsweise eine seitliche Öffnung auf, die mit einem Zuführkanal verbunden ist, mit dem Fügeelemente einzeln dem Fügekanal unterhalb des Stempels zuführbar sind.

Der Stempel des Setzgeräts bewegt sich vorzugsweise in einem hohlzylindrischen Fügekanal. Dieser Fügekanal realisiert eine Niederhaltefunktion und/oder eine Zuführfunktion von Fügeelementen zur Vorbereitung einer Verbindung. Zu diesem Zweck werden über eine seitliche Öffnung im Fügekanal Fügeelemente zugeführt. Gemäß einer Alternative dient der Zufuhr der Fügeelemente ein Zuführkanal in Form eines profilierten Schlauchs, Kanals oder dergleichen. Um Fügeelemente einzeln dem Fügekanal unterhalb des Stempels zuführen zu können, ist der Fügekanal in Setzrichtung linear versetzbar, so dass die seitliche Öffnung zum Zuführen eines Fügeelements durch den Stempel freigegeben wird. Zu diesem Zweck verfügt das Setzgerät vorzugsweise über einen dritten Linearantrieb, mit dem der Fügekanal in Verbindung mit dem Zuführkanal in eine Zuführposition und in eine Fügeposition versetzbar ist. In der Zuführposition gibt der Stempel die seitliche Öffnung im Zuführkanal frei, so dass ein Fügeelement dem Fügekanal zuführbar ist. In der Fügeposition blockiert der Stempel die seitliche Öffnung im Fügekanal, so dass kein weiteres Fügeelement dem Fügekanal zuführbar ist und ein Setzvorgang stattfinden kann.

Vorzugsweise umfasst der Fügekanal eine Bremsstrecke, mit der ein Fügeelement abbremsbar und/oder im Fügekanal unterhalb des Stempels positionierbar ist.

Es ist weiterhin bevorzugt, das Setzgerät mit einem Roboter zu verbinden. Zu diesem Zweck wird der Roboter mit dem ersten oder dem zweiten Hebelarm verbunden, so dass eine optimale Bewegung des Setzgeräts im Raum gewährleistet ist.

Ein Zuführmodul des Setzgeräts kann die folgenden Merkmale aufweisen: einen hohlzylindrischen Fügekanal mit einer seitlichen Öffnung, einen Zuführkanal für Fügeelemente, der mit der seitlichen Öffnung des Fügekanals verbunden ist, und einen Linearantrieb, mit dem der Fügekanal zwischen einer Grundposition und einer Zuführposition linear versetzbar ist.

Ein Fügeverfahren zum Verbinden der mindestens zwei Bauteile mit Hilfe des oben beschriebenen Setzgeräts weist die folgenden Schritte auf: Entfernen des ersten und zweiten Arbeitsendes voneinander mit Hilfe des ersten Linearantriebs, Zuführen eines Fügeelements in den Fügekanal mit Hilfe des Zuführmoduls, Positionieren von mindestens zwei Bauteilen zwischen dem ersten und zweiten Arbeitsende und Bewegen der Arbeitsenden aufeinander zu und Fügen des Fügeelements in die mindestens zwei Bauteile mit Hilfe des ersten Linearantriebs.

### Kurze Beschreibung der begleitenden Zeichnungen

Die vorliegende Erfindung wird unter Bezugnahme auf die begleitende Zeichnung näher erläutert. Es zeigen:
- Fig. 1: eine Seitenansicht einer bevorzugten Ausführungsform des erfindungsgemäßen Setzgeräts,
- Fig. 2: eine Seitenansicht der Ausführungsform aus Fig. 1 in geöffnetem Zustand,
- Fig. 3: eine perspektivische Ansicht einer weiteren Ausführungsform des erfindungsgemäßen Setzgeräts,
- Fig. 4: eine vergrößerte Ausschnittsdarstellung des Setzkopfs aus Fig. 3,
- Fig. 5: eine Schnittdarstellung einer bevorzugten Ausführungsform des Setzkopfs vorliegender Erfindung in Ausgangsposition,
- Fig. 6: den Setzkopf aus Fig. 5 in Zuführposition,
- Fig. 7: den Setzkopf aus Fig. 5 mit zugeführtem Niet,
- Fig. 8: den Setzkopf aus Fig. 5 in Niederhalteposition am Bauteil,
- Fig. 9: den Setzkopf aus Fig. 5 in Fügeposition und
- Fig. 10: ein Flussdiagramm gemäß einer bevorzugten Ausführungsform des erfindungsgemäßen Fügeverfahrens, und
- Fig. 11A-C: eine bevorzugte Ausführungsform des erfindungsgemäßen Setzgeräts mit Schubkurbel-Kniehebelgetriebe in Kombination mit einem Elektromotor.

### Detaillierte Beschreibung der bevorzugten Ausführungsformen

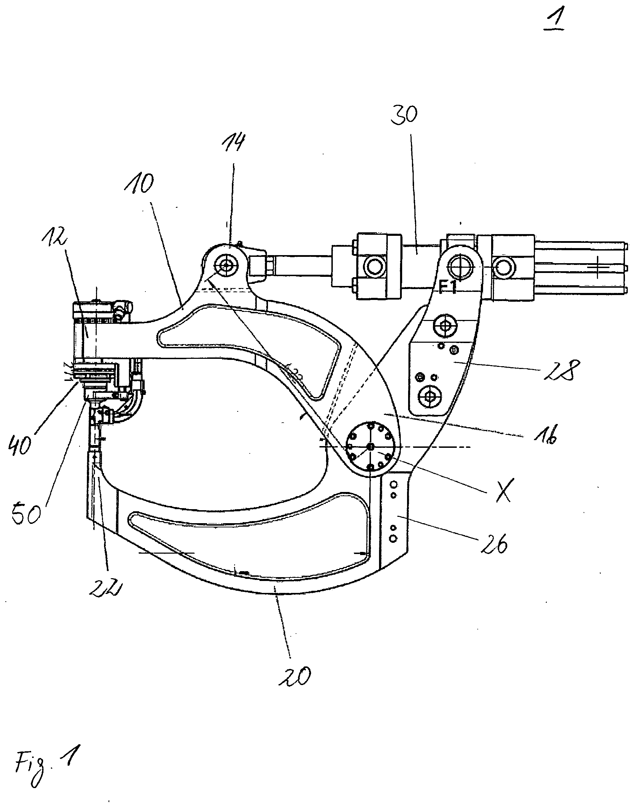

Eine bevorzugte Ausführungsform des erfindungsgemäßen Setzgeräts 1 ist in Fig. 1 dargestellt. Zur Realisierung einer geringen Störkontur des Setzgeräts 1 ist der sonst übliche C-Rahmen von Setzgeräten hier zweiteilig ausgeführt. Er besteht aus einem ersten Hebelarm 10 und einem zweiten Hebelarm 20. Die Hebelarme 10, 20 sind schwenkbar im Drehpunkt X miteinander verbunden. Aufgrund dieser Konstruktion bilden sie eine zangenartige Anordnung, die über einen Linearantrieb 30 betätigt wird. Der Linearantrieb 30 bringt die Fügekraft auf, um beispielsweise mindestens zwei Bauteile B miteinander zu verbinden. Der Linearantrieb 30 ist bevorzugt ein hydraulischer oder pneumatischer Kolben-Zylinder-Antrieb oder ein elektromotorisches Stellglied, wie ein elektrischer Spindeltrieb. Andere Antriebssysteme sind ebenfalls bevorzugt, die eine automatische Längenänderung realisieren.

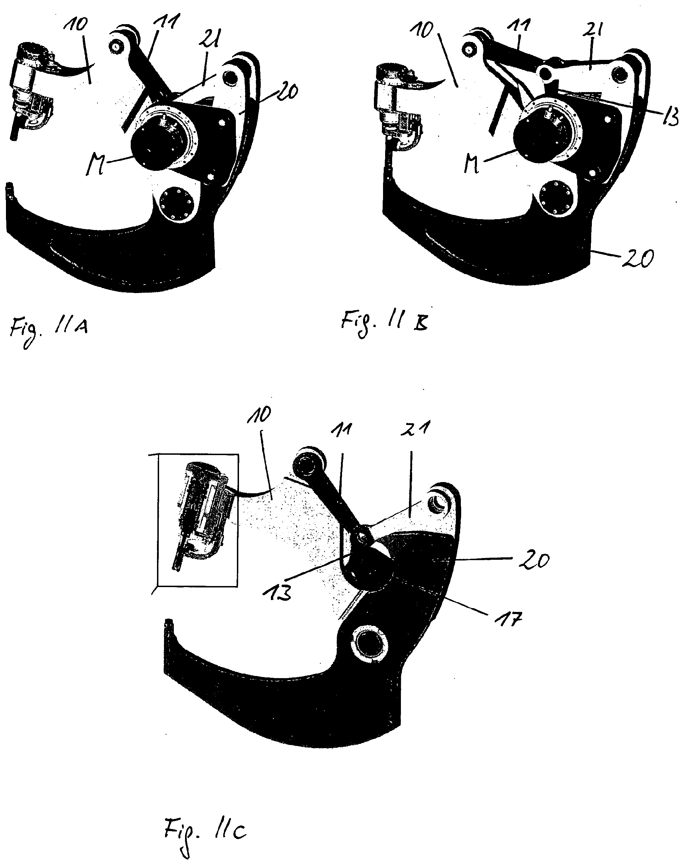

Es ist weiterhin bevorzugt, ein Schubkurbel-Kniehebelgetriebe 11, 21, 13, 17 in Kombination mit einem Elektromotor M als Linearantrieb für die Hebelarme 10, 20 des Setzgeräts 1 einzusetzen. Beispielgebend ist diese bevorzugte Ausführungsform des Setzgeräts 1 in den Figuren 11A bis C dargestellt.

Fig. 11A zeigt die beiden Hebel 10, 20 des Setzgeräts, die über den Drehpunkt X drehbar miteinander verbunden sind. Die Hebel 10, 20 sind über das obengenannte Schubkurbel-Kniehebelgetriebe 11, 21, 13, 17 bewegbar. Das Kniehebelgetriebe besteht aus den Armen 11, 21, während der Arm 11 mit dem Hebel 10 und der Arm 21 mit dem Hebel 20 verbunden ist. Die Arme 11,21 bilden den Kniehebel des Kniehebelgetriebes.

Ein Pleuel 13 ist an einem Ende jeweils mit einem Ende der Arme 11, 12 beweglich verbunden. Das andere Ende des Pleuels 13 ist außermittig an einer drehbaren Scheibe 17 angeordnet, so dass sie gemeinsam eine Schubkurbel bilden. Die Scheibe 17 wird über einen Elektromotor M gedreht. Die Bewegung des Pleuels 13 entlang der durch die Scheibe 17 vorgegebenen Kreisbahn vergrößert oder verkleinert den Winkel zwischen den Armen 11, 12. Dadurch werden die Hebel 10, 20 des Setzgeräts 1 entsprechend bewegt, um einen Fügevorgang durchzuführen oder um das Setzgerät zum Entnehmen oder Einlegen von Bauteilen zu öffnen. Zur Veranschaulichung zeigt die Fig. 11B das geöffnete Setzgerät 1. Über die Drehung des Elektromotors M und somit der Scheibe 17 wurde der Pleuel 13 derart bewegt, dass die Arme 11,21 einen kleineren Winkel einschließen als bei geschlossenem Setzgerät 1 bzw. während eines Fügevorgangs des Setzgeräts 1. Dreht sich der Elektromotor M und somit die Scheibe 17, wird der Pleuel 13 in Richtung der Arme 11, 21 bewegt. Durch diese Bewegung vergrößert sich der Winkel, der durch die Arme 11,21 eingeschlossen ist. Gleichzeitig werden mit dieser Bewegung die Hebel 10, 20 des Setzgeräts geschlossen, um beispielsweise einen Fügevorgang durchzuführen.

Gegen Ende eines Fügevorgangs ist der Kniehebel 11, 21 nahezu gestreckt. Das Gleiche gilt für den Pleuel 13 mit Scheibe 17, der sich in annähernd senkrechter Ausrichtung zum Umfang der Scheibe 17 befindet (vgl. Fig. 11C). Diese geometrische Anordnung von Kniehebel 11, 21 und Pleuel 13/Scheibe 17 erzeugt trotz eines geringen Drehmoments des Elektromotors M über die Hebelwirkung des Schubkurbel-Kniehebelgetriebes hohe Fügekräfte des Setzgeräts 1.

Alternativ zur Kombination aus Pleuel 13 und Scheibe 17 ist es ebenfalls bevorzugt, den Kniehebel 11, 21 mit einem Linearantrieb zu spreizen, der anstelle des Pleuels 13 an der Verbindungsstelle zwischen den Armen 11, 21 angreift (nicht gezeigt).

Die Hebelarme 10, 20 werden gemäß einer weiteren Ausführungsform durch Profilstrukturen gebildet, um eine Gewichtsersparnis im Vergleich zu massiven Vollmaterial-Konstruktionen zu erzielen. Zudem ist der erste Hebelarm 10 in seiner Länge minimiert. Dadurch wird ebenfalls das Gewicht des Setzgeräts reduziert und seine Störkontur verkleinert. Zu diesem Zweck ist die Drehverbindung mit dem zweiten Hebelarm 20 an einem Ende 16 des ersten Hebelarms 10 angeordnet. Am anderen Ende des ersten Hebelarms 10 befindet sich das erste Arbeitsende 12 mit Setzkopf 40, 50 (s. unten). Der Linearantrieb 30 ist am ersten Hebelarm 10 zwischen dem ersten Arbeitsende 12 und dem Ende 16 befestigt. Dies reduziert ebenfalls die Störkontur des Setzgeräts 1, weil der Linearantrieb 30 zum Teil parallel zum ersten Hebelarm 10 verläuft. Des Weiteren sorgt die Form des ersten Hebelarms 10 für eine kompaktere Konstruktion des Setzgeräts 1 im Vergleich zum Stand der Technik.

Der zweite Hebelarm 20 umfasst ein zweites Arbeitsende 22, an dem vorzugsweise eine Matrize 60 angeordnet ist. Es ist ebenfalls denkbar, am zweiten Arbeitsende 22 ein anderes Gegenwerkzeug zu befestigen, das mit dem Werkzeug, beispielsweise dem Stempel 70, am ersten Arbeitsende 12 zusammenwirkt.

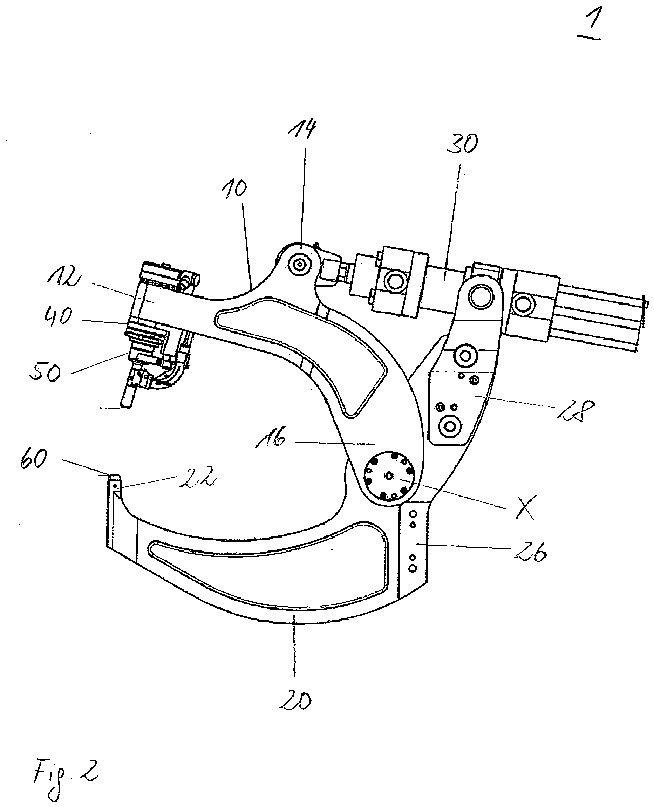

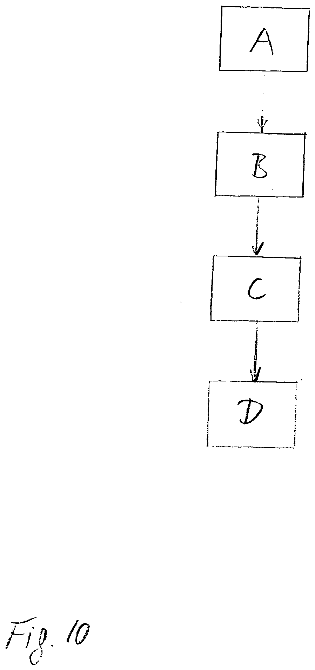

Das Ende 28 des zweiten Hebelarms 20 erstreckt sich über die Drehverbindung X hinaus. Mit dem Ende 28 ist der Linearantrieb 30 verbunden, so dass über seine Längenänderung das Setzgerät 1 betätigt wird. Wird die Länge des Linearantriebs 30 verringert (Schritt A, Fig. 10), öffnet sich die zangenartige Anordnung der Hebelarme 10, 20 des Setzgeräts 1. Dieser Zustand ist in Fig. 2 dargestellt. Während des Öffnens des Setzgeräts 1 werden das erste 12 und das zweite Arbeitsende 22 voneinander entfernt. Verlängert sich der Linearantrieb 30 (Schritt D, Fig. 10), bewegen sich die Arbeitsenden 12, 22 und das mit ihnen verbundene Werkzeug 40, 50 und Gegenwerkzeug 60 entlang einer Kreisbahn aufeinander zu. Aufgrund dieser Bewegung findet ebenfalls der Fügevorgang des Setzgeräts 1 entlang einer Kreisbahn statt. Es ist somit kein fügender Antrieb, wie beispielsweise ein Setzzylinder, am ersten 12 oder zweiten Arbeitsende 22 erforderlich.

Vorzugsweise wird das Setzgerät 1 mit Hilfe eines Roboters (nicht gezeigt) zu den Fügestellen bewegt. Der Roboter wird mit dem Setzgerät 1 an der Befestigungsstelle 26 des zweiten Hebelarms 20 verbunden. Aufgrund der Anordnung des Linearantriebs 30 gemäß Fig. 1 befindet sich der Schwerpunkt des Setzgeräts 1 annähernd auf Höhe der Befestigungsstelle 26. Dies erleichtert das Handling und die Beweglichkeit des Setzgeräts 1 im Vergleich zu einer Schwerpunktsverlagerung des Setzgeräts 1 in Richtung der Arbeitsenden 12, 22.

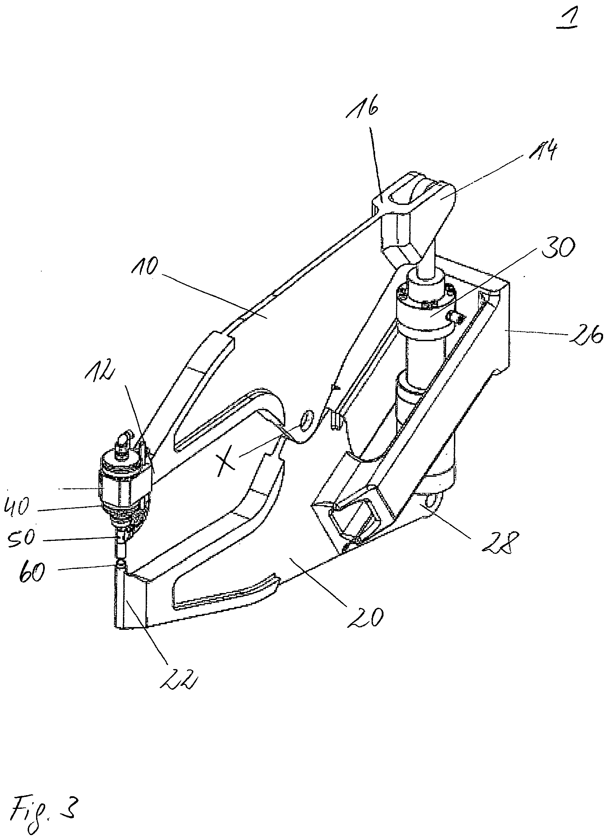

Fig. 3 zeigt eine weitere bevorzugte Ausführungsform des Setzgeräts 1. Im Vergleich zum Setzgerät 1 der Fig. 1 sind funktionell ähnliche Bestandteile mit den gleichen Bezugszeichen bezeichnet. Man kann erkennen, dass sich der erste Hebelarm 10 über den verbindenden Drehpunkt X hinaus erstreckt. An seinem Ende 16 ist an der Stelle 14 der Linearantrieb 30 befestigt.

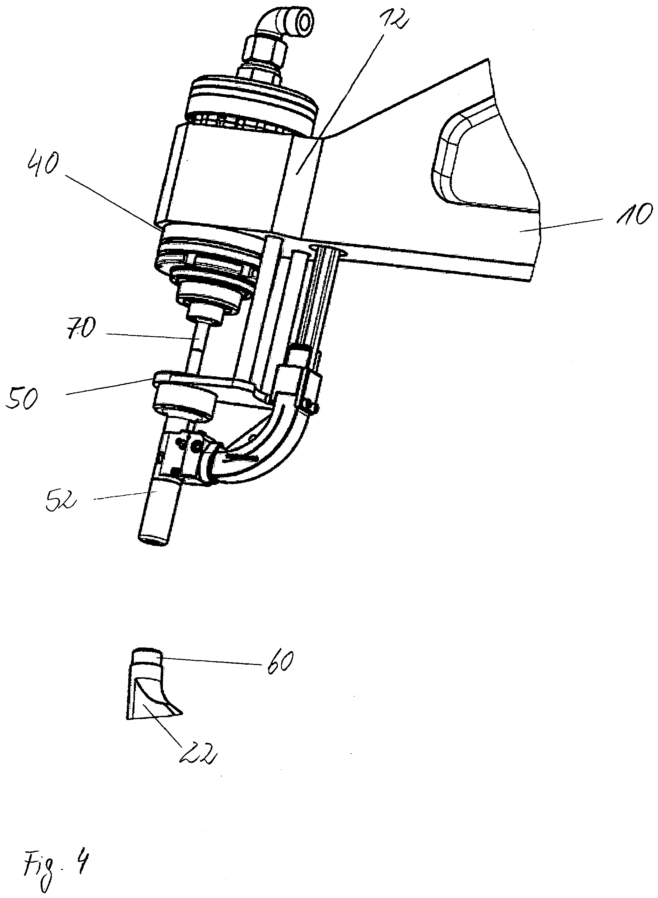

Fig. 4 zeigt eine vergrößerte Darstellung der Arbeitsenden 12, 22. Am zweiten Arbeitsende 22 ist bevorzugt die Matrize 60 als Gegenwerkzeug angeordnet. Am ersten Arbeitsende 12 befindet sich der Setzkopf 40, 50 mit dem Stempel 70 als Werkzeug. Der Setzkopf umfasst ein Niederhaltermodul 40 und/oder ein Zuführmodul 50, wie unten näher erläutert ist. Das Niederhaltermodul 40 dient dem mechanischen Vorspannen der Bauteile B vor, während oder nach dem Fügen. Das Zuführmodul 50 realisiert die Zufuhr von einzelnen Fügeelementen 90, beispielsweise Halbhohlstanznieten, Vollstanznieten und ähnliche bekannte Fügeelemente, in einen Fügekanal 52 des Setzgeräts 1.

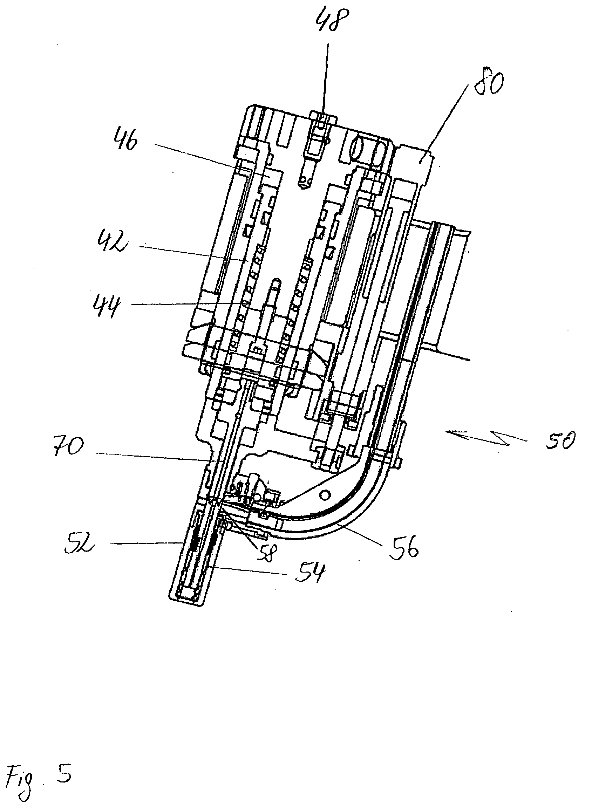

Fig. 5 zeigt eine vergrößerte Schnittdarstellung des bevorzugten Setzkopfes 40, 50 in einer Ausgangsposition. Das Setzgerät 1 (nicht gezeigt) befindet sich in geöffnetem Zustand, wie in Fig. 2 dargestellt ist. Wie oben bereits erläutert worden ist, umfasst der Setzkopf das Niederhaltermodul 40 und/oder das Zuführmodul 50.

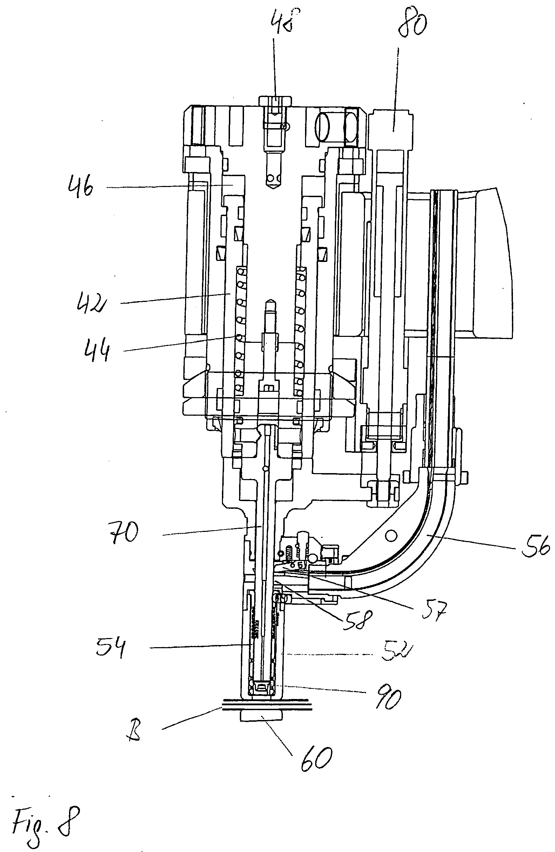

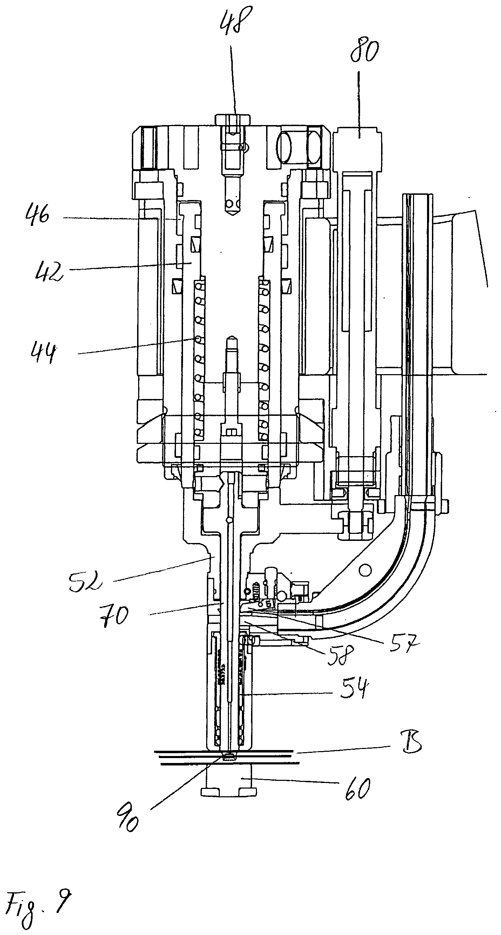

Zum Herstellen einer Verbindung von zwei Bauteilen B (vgl. Fig. 8) ist der Stempel 70 mit dem ersten Arbeitsende 12 verbunden. Der Stempel 70 bewegt sich innerhalb des hohlzylindrischen Fügekanals 52. Umfasst das Setzgerät 1 das Niederhaltermodul 40, stützt sich der hohlzylindrische Fügekanal 52 vorzugsweise an einem hohlzylindrischen Niederhalter 42 ab. Der Niederhalter 42 ist gemeinsam mit dem Fügekanal 52 relativ zum Stempel linear verschiebbar. Während der Niederhalter 42 in Fig. 5 in einer Ausgangsposition gezeigt ist, befindet er sich in Fig. 9 in einer Fügeposition.

Der Niederhalter 42 wird mit Hilfe eines Linearantriebs 46, 48 parallel zur Längsachse des Stempels 70 bewegt. Dieser Linearantrieb 46, 48 basiert bevorzugt auf den gleichen Antriebsprinzipien wie der erste Linearantrieb 30 (s. oben). Gemäß der in Fig. 5 gezeigten bevorzugten Ausführungsform ist der Niederhalter 42 als hohlzylindrischer Kolben ausgebildet. Über die Kammer 46 und den Anschluss 48 wird der Niederhalter 42 pneumatisch oder hydraulisch betätigt. Über die Kammer 46 wird der Niederhalter 42 mit einem definierten Druck und somit einer definierten Niederhalterkraft beaufschlagt. Sobald der Fügekanal 52 auf den Bauteilen B aufliegt, wird die Niederhalterkraft aus der Kammer 46 über den Niederhalter 42 und den Fügekanal 52 auf die Bauteile B übertragen. Wird durch das Schließen des Setzgeräts 1 die Niederhalterkraft am Bauteil B überschritten, weicht der Niederhalter 42 in die Kammer 46 aus, um die vorgegebene Niederhalterkraft aufrechtzuerhalten. Dies ist durch eine definierte Steuerung des Mediums in der Kammer 46 oder durch eine Kraftsteuerung des Linearantriebs 46, 48 realisierbar.

Um den Niederhalter 42 zudem aus der Fügeposition oder einer Vorspannposition in seine Ausgangsposition zurückzubewegen, umfasst er bevorzugt eine Rückstellfeder 44. Die Rückstellfeder 44 umgibt den Niederhalter 42 und ist koaxial zu ihm angeordnet. Bewegt sich der Niederhalter 42 in die Kammer 46, wird die Rückstellfeder 44 auf Zug belastet. Nach Entlastung des Niederhalters 42 sorgt die Rückstellfeder für eine Rückführung des Niederhalters 42 in seine Ausgangsposition.

Gemäß einer weiteren Alternative umfasst vorliegende Erfindung das Zuführmodul 50. Eine bevorzugte Ausführungsform des Zuführmoduls 50 ist ebenfalls in Fig. 5 dargestellt. Das Zuführmodul 50 umfasst den Fügekanal 52, der lösbar vom Niederhalter 42 ausgebildet ist. Zudem ist der Fügekanal 52 mit einem Linearantrieb 80 verbunden. Der Linearantrieb 80 versetzt den Fügekanal 52 in Längsrichtung des Stempels 70, um dem Fügekanal 52 einzelne Fügeelemente 90 zuzuführen. Der Linearantrieb 80 arbeitet nach ähnlichen Antriebsalternativen, die im Zusammenhang mit dem Linearantrieb 30 erwähnt worden sind.

Der Fügekanal 52 umfasst weiterhin eine seitliche Öffnung 58, über die ein Zuführkanal 56 mit dem Fügekanal 52 verbunden ist. Über den Zuführkanal 56 werden Fügeelemente 90 dem Fügekanal 52 zugeführt. Dazu umfasst der Zuführkanal 56 an seinem Ausgang in den Fügekanal 52 vorzugsweise eine steuerbare Sperrklinke 57. Die Sperrklinke 57 gibt die Öffnung 58 gezielt frei, so dass ein Fügeelement 90 in den Fügekanal 52 transportiert werden kann. Eine derartige Steuerung erfolgt bevorzugt über eine an das Setzgerät 1 angeschlossene Steuereinheit.

Des Weiteren umfasst der Fügekanal 52 bevorzugt eine Bremsstrecke 54. Die Bremsstrecke 54 bremst ein Fügeelement 90 ab und/oder positioniert es unterhalb des Stempels 70, wenn das Fügeelement 90 dem Fügekanal 52 zugeführt worden ist. Die Bremsstrecke 54 umfasst radial in den Fügekanal 52 ragende Bremsstege oder Bremsbacken bzw. -schalen.

Während des Betriebs des Setzgeräts 1 wird zunächst das Setzgerät 1 geöffnet (Schritt A, Fig. 10), wie es in Fig. 2 dargestellt ist. Dazu werden die Arbeitsenden 12, 22 mit Hilfe des Linearantriebs 30 maximal voneinander entfernt. Der Niederhalter 42 und das Zuführmodul 50 befinden sich in der Ausgangsposition, die in Fig. 5 gezeigt ist.

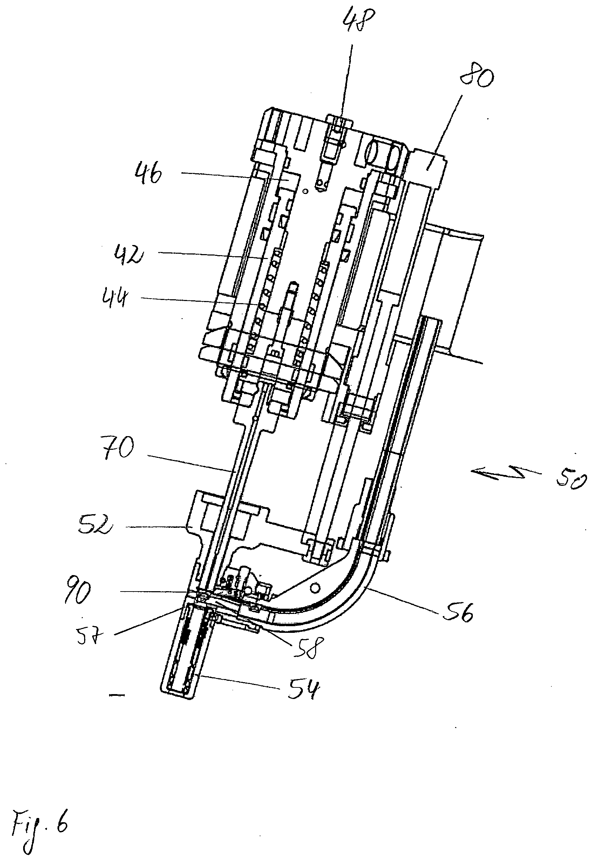

Nachfolgend wird gemäß Fig. 6 der Linearantrieb 80 verlängert. Dadurch wird der Fügekanal 52 mit Zuführkanal 56 soweit in Fügerichtung des Stempels 70 versetzt, dass der Stempel 70 die Öffnung 58 freigibt. Der Zuführkanal 56 besteht vorzugsweise aus einem profilierten Kanal, in dem eine Mehrzahl von Fügeelementen 90 (nicht gezeigt) an der Sperrklinke 57 anstehen. Die Sperrklinke 57 gibt gesteuert ein Fügeelement 90 frei, so dass dieses Fügeelement 90 durch die Öffnung 58 in den Fügekanal 52 eintritt (Schritt B). Innerhalb des Fügekanals 52 wird das Fügeelement 90 durch die Bremsstrecke 54 gehalten, so dass es den Fügekanal 92 zunächst nicht verlassen kann.

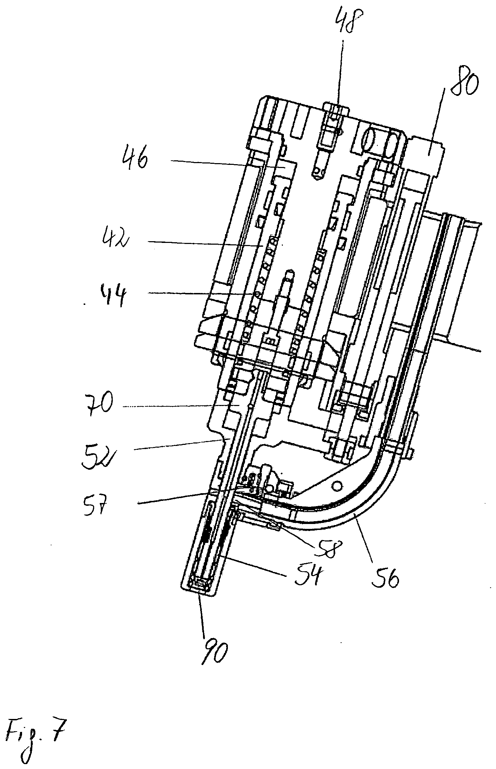

Nachdem das Fügeelement 90 dem Fügekanal 52 zugeführt worden ist, wird der Linearantrieb 80 wieder verkürzt. Dadurch kehrt das Zuführmodul 50 in seine Ausgangsposition gemäß Fig. 7 zurück. Das Fügeelement 90 ist nun nahe dem offenen Ende des Fügekanals 52 an der Unterseite des Stempels 70 positioniert.

Das Setzgerät 1 wird nun zur Fügestelle bewegt. Diese Bewegung realisiert beispielsweise der mit dem Setzgerät 1 verbundene Roboter. An der Fügestelle wird das Setzgerät 1 geschlossen, wie es in Fig. 1 und 8 dargestellt ist. Die Arbeitsenden 12, 22 werden aufeinander zu bewegt, bis die Matrize 60 und der Fügekanal 52 an den Bauteilen B anliegen (Schritt C).

Während sich der Linearantrieb 30 weiter verlängert und sich das Setzgerät 1 weiter schließt, werden die Bauteile B über den Fügekanal 52 und den Niederhalter 42 mit definierter Niederhalterkraft vorgespannt. Die Niederhalterkraft gibt der Linearantrieb 46, 48 vor (s. oben).

Um das Fügeelement 90 zu fügen, verlängert sich der Linearantrieb 30 weiter. Dabei drückt der Stempel 70 das Fügeelement 90 in die Bauteile B ein (Schritt D). Um während der Setzbewegung des Stempels 70 in Richtung der Bauteile die Niederhalterkraft nicht zu steigern oder den Niederhalter 42 abzuschalten, weicht der Niederhalter 42 mit Fügekanal 52 entgegen der Fügerichtung aus. Der Niederhalter 42 bewegt sich dabei gemäß der bevorzugten Ausführungsform in Fig. 9 in die Kammer 46 hinein. Der Linearantrieb 46, 48 gibt somit kraftgesteuert eine Verkürzung vor, so dass die Niederhalterkraft konstant bleibt, sich verringert oder abgeschaltet ist. In gleicher Weise kann über die Steuerung des Linearantriebs 46, 48 eine Erhöhung der Niederhalterkraft während des Setzvorgangs erzielt werden.

Nachdem das Fügeelement 90 gesetzt worden ist, wird das Setzgerät 1 geöffnet und der Niederhalter 42 mit Fügekanal 52 kehrt in seine Ausgangsposition gemäß Fig. 5 zurück.

## Patentansprüche

1. Setzgerät (1) zum Verbinden von mindestens zwei Bauteilen, insbesondere zum Stanznieten, das die folgenden Merkmale aufweist:
a. einen ersten Hebelarm (10) mit einem ersten Arbeitsende (12) und einen zweiten Hebelarm (20) mit einem zweiten Arbeitsende (22), die zangenartig schwenkbar in einem Drehpunkt (X) miteinander verbunden sind,
b. einen ersten Linearantrieb (30) in Verbindung mit dem ersten (10) und dem zweiten Hebelarm (20), so dass sich bei Verlängerung des Linearantriebs (30) das erste (12) und das zweite Arbeitsende (22) aufeinander zu bewegen und bei einer Verkürzung des Linearantriebs (30) das erste (12) und das zweite Arbeitsende (22) voneinander entfernen, und
c. einen am ersten Arbeitsende (12) angeordneten Stempel (70), der mit einem Niederhaltermodul (40) verbunden ist, wobei der Stempel (70) und/oder eine am zweiten Arbeitsende (22) angeordnete Matrize (60) durch den ersten Linearantrieb (30) entlang einer Kreisbahn bewegbar sind/ist, um die Verbindung zwischen den mindestens zwei Bauteilen (B) herzustellen, **dadurch gekennzeichnet dass**
d. der Stempel (70) innerhalb eines hohlzylindrischen Fügekanals (52) als ein hohlzylindrischer Niederhalter (42) am ersten Arbeitsende (12) des ersten Hebelarms (10) angeordnet ist, der relativ zum Stempel (70) durch einen zweiten Linearantrieb linear in eine Vorspannposition des Niederhalters (42) bewegbar ist, während der Niederhalter (42) durch eine Rückstellfeder (44) aus der Vorspannposition in eine Ausgangsposition rückstellbar ist.

2. Setzgerät (1) gemäß Anspruch 1, in dem der Niederhalter (42) mit dem zweiten Linearantrieb (46, 48) verbunden ist, so dass die mindestens zwei Bauteile (B) in der Vorspannposition des Niederhalters (42) zwischen dem Niederhalter (42, 52) und dem zweiten Arbeitsende, insbesondere einer Matrize (60), mechanisch vorspannbar sind.

3. Setzgerät (1) gemäß Anspruch 1, in dem der Stempel (70) mit einem Zuführmodul (50) verbunden ist, wobei das Zuführmodul (50) einen relativ zum Stempel (70) linear versetzbaren hohlzylindrischen Fügekanal (52) aufweist, durch den der Stempel (70) bewegbar ist.

4. Setzgerät (1) gemäß Anspruch 3, dessen Fügekanal (52) eine laterale Öffnung (58) umfasst, die mit einem Zuführkanal (56) verbunden ist, mit dem Fügeelemente (90) einzeln dem Fügekanal (52) unterhalb des Stempels (70) zuführbar sind.

5. Setzgerät (1) gemäß Anspruch 1, dessen erster Linearantrieb aus einem Schubkurbel-Kniehebelgetriebe (11, 21, 13, 17) in Kombination mit einem Elektromotor (M) besteht.

6. Setzgerät (1) gemäß Anspruch 4, dessen Fügekanal (52) mit dem Zuführkanal (56) über einen dritten Linearantrieb (80) in eine Zuführposition und eine Fügeposition derart versetzbar ist, dass
a. in der Zuführposition der Stempel (70) die seitliche Öffnung im Fügekanal (52) freigibt, so dass ein Fügeelement (90) dem Fügekanal (52) zuführbar ist, und
b. in der Fügeposition der Stempel (70) die seitliche Öffnung (58) im Fügekanal (52) blockiert, so dass kein Fügeelement (90) dem Fügekanal (52) zuführbar ist.

7. Setzgerät (1) gemäß einem der Ansprüche 3 bis 5, in dem der Fügekanal (52) eine Bremsstrecke (54) aufweist, mit der ein Fügeelement (90) abbremsbar und/oder im Fügekanal (52) unterhalb des Stempels (70) positionierbar ist.

8. Setzgerät (1) gemäß Anspruch 3, dessen Fügekanal (52) einen lösbaren Teil eines hohlzylindrischen Niederhalters (42) bildet, in dem der Stempel (70) angeordnet ist.

## Claims

1. A setting device (1) for connecting at least two components, especially for punch riveting, that comprises the following features:
a. a first lever arm (10) having a first working end (12) and a second lever arm (20) having a second working end (22) that are pivotably connected to each other like pliers in a point of rotation (X),
b. a first linear drive (30) connected to the first (10) and the second lever arm (20) such that, by extending the linear drive (30), the first (12) and second working ends (22) move toward each other and by contracting the linear drive (30), the first (12) and the second working end (22) move away from each other, and
c. a punch (70) arranged at the first working end (12) that is connected to a hold-down module (40), wherein the punch (70) and/or a die (60) arranged at the second working end (22) can be moved by the linear drive (30) along a circular path to establish the connection between the at least two components (B), **characterized in that**
d. the punch (70) is arranged within a hollow cylindrical joining channel (52) used as a hollow cylindrical hold-down element (42) at the first working end (12) of the first lever arm (10), which is movable relative to the punch (70) by means of a second linear drive linearly into a pretensioned position of the hold-down element (42), while the hold-down element (42) can return by means of a return spring (44) from the pretensioned position into an initial position.

2. The setting device (1) according to claim 1, in which the hold-down element (42) is connected to the second linear drive (46, 48) such that the at least two components (B) can be mechanically pretensioned in the pretensioned position of the hold-down element (42) between the hold-down element (42, 52) and the second working end, especially a die (60).

3. The setting device (1) according to claim 1, in which the punch (70) is connected to a supply module (50), wherein the supply module (50) comprises a hollow cylindrical joining channel (52) that can shift linearly relative to the punch (70) and through which the punch (70) is movable.

4. The setting device (1) according to claim 3, the joining channel (52) of which comprises a side opening (58) that is connected to a supply channel (56) by means of which the joining elements (90) can be individually supplied to the joining channel (52) under the punch (70).

5. The setting device (1) according to claim 1, the first linear drive of which consists of a slider crank-toggle lever mechanism (11, 21, 13, 17) in combination with an electric motor (M).

6. The setting device (1) according to claim 4, the joining channel (52) of which can be shifted with the supply channel (56) into a supply position and a joining position by means of a third linear drive (80), such that
a. in the supply position, the punch (70) releases the side opening in the joining channel (52) so that a joining element (90) can be supplied to the joining channel (52), and
b. in the joining position, the punch (70) blocks the side opening (58) in the joining channel (52) so that no joining element (90) can be supplied to the joining channel (52).

7. The setting device (1) according to one of the claims 3 to 5, wherein the joining channel (52) comprises a brake path (54) by means of which a joining element (90) can be braked and/or positioned (52) in the joining channel below the punch (70).

8. The setting device (1) according to claim 3, the joining channel (52) of which forms a releasable part of a hollow cylindrical hold-down element (42) in which the punch (70) is arranged.

## Revendications

1. Outil de scellement (1) pour l'assemblage d'au moins deux composants, en particulier pour l'estampage-rivetage, présentant les caractéristiques suivantes :
a. un premier bras de levier (10) avec une première extrémité de travail (12) et un deuxième bras de levier (20) avec une deuxième extrémité de travail (22), lesquels sont reliés entre eux de façon pivotante à la façon d'une pince en un point de rotation (X),
b. un premier entraînement linéaire (30) relié au premier (10) et au deuxième bras de levier (20), de telle façon que lors de l'allongement de l'entraînement linéaire (30), la première (12) et la deuxième extrémité de travail (22) se rapprochent l'une de l'autre, et que lors d'un raccourcissement de l'entraînement linéaire (30), la première (12) et la deuxième extrémité de travail (22) s'éloignent l'une de l'autre, et
c. un tampon (70) disposé sur la première extrémité de travail (12), lequel est relié à un module de serre-flan (40), le tampon (70) et/ou une matrice (60) disposée sur la deuxième extrémité de travail (22) pouvant être déplacé(es) le long d'une voie circulaire à l'aide du premier entraînement linéaire (30), afin d'établir la liaison entre les au moins deux composants (B), **caractérisé en ce que**
d. le tampon (70) est disposé à l'intérieur d'un canal d'assemblage cylindrique creux (52) comme un serre-flanc cylindrique creux (42) sur la première extrémité de travail (12) du premier bras de levier (10), lequel est déplaçable par rapport au tampon (70) à l'aide d'un deuxième entraînement linéaire vers une position de précontrainte du serre-flan (42), tandis que le serre-flan (42) peut être sorti de la position de précontrainte et renvoyé dans une position initiale à l'aide d'un ressort de rappel (44).

2. Outil de scellement (1) selon la revendication 1, dans lequel le serre-flan (42) est relié au deuxième entraînement linéaire (46, 48), de telle façon que les au moins deux composants (B) peuvent être précontraints mécaniquement entre le serre-flan (42, 52) et la deuxième extrémité de travail, en particulier une matrice (60), dans la position de précontrainte du serre-flan (42).

3. Outil de scellement (1) selon la revendication 1, dans lequel le tampon (70) est relié à un module d'amenée (50), le module d'amenée (50) présentant un canal d'assemblage cylindrique creux (52) apte à être déplacé linéairement par rapport au tampon (70), à travers lequel le tampon (70) peut être déplacé.

4. Outil de scellement (1) selon la revendication 3, dont le canal d'assemblage (52) comporte une ouverture latérale (58) reliée à un canal d'amenée (56) permettant d'amener des éléments d'assemblage (90) séparément au canal d'assemblage (52) en dessous du tampon (70).

5. Outil de scellement (1) selon la revendication 1, dont le premier entraînement linéaire est constitué d'un mécanisme à levier coudé à came de guidage (11, 21, 13, 17) en combinaison avec un moteur électrique (M).

6. Outil de scellement (1) selon la revendication 4, dont le canal d'assemblage (52) peut être déplacé avec le canal d'amenée (56) par le biais d'un troisième entraînement linéaire (80) vers une position d'amenée et une position d'assemblage, de telle façon que :
a. dans la position d'amenée, le tampon (70) libère l'ouverture latérale dans le canal d'assemblage (52), de manière à pouvoir amener un élément d'assemblage (90) au canal d'assemblage (52), et
b. dans la position d'assemblage, le tampon (70) bloque l'ouverture latérale (58) dans le canal d'assemblage (52), de manière à ce qu'aucun élément d'assemblage (90) ne puisse être amené au canal d'assemblage (52).

7. Outil de scellement (1) selon l'une des revendications 3 à 5, dans lequel le canal d'assemblage (52) présente une distance de freinage (54) permettant de freiner un élément d'assemblage (90) et/ou de le positionner en dessous du tampon (70) dans le canal d'assemblage (52).

8. Outil de scellement (1) selon la revendication 3, dont le canal d'assemblage (52) forme une partie détachable d'un serre-flan cylindrique creux (42), dans laquelle est disposé le tampon (70).
